# EUROPÄISCHE PATENTSCHRIFT

(11) **EP 4 048 452 B1**
(45) Veröffentlichungstag und Bekanntmachung des Hinweises auf die Patenterteilung: **17.01.2024**
(21) Anmeldenummer: 20792556.1
(22) Anmeldetag: 06.10.2020
(51) Int. Cl.: B08B 9/20, B08B 9/44, B65G 21/20

(54) **FORMATTEILANORDNUNG FÜR EINE BEHÄLTERAUFGABE FÜR EINE BEHÄLTERBEHANDLUNGSMASCHINE**
FORMAT ARRANGEMENT FOR A CONTAINER FEED FOR A CONTAINER TREATMENT MACHINE
PIÈCE DE FORMAT POUR UN DISPOSITIF DE CHARGEMENT DE RÉCIPIENTS POUR UNE MACHINE DE TRAITEMENT DE RÉCIPIENTS

(30) Priorität: 21.10.2019 DE 102019128355
(43) Veröffentlichungstag der Anmeldung: 31.08.2022
(73) Patentinhaber: KHS GmbH, 44143 Dortmund (DE)
(72) Erfinder: BÖDDEKER, Andre, 48145 Münster (DE); MEWISSEN, Florian, 45257 Essen (DE)
(86) Internationale Anmeldenummer: PCT/EP2020/077933
(87) Internationale Veröffentlichungsnummer: WO 2021/078506

(56) Entgegenhaltungen:
- EP-A1- 2 404 832
- DE-A1- 1 815 735
- DE-A1-102005 011 456
- DE-A1-102006 046 556
- FR-A1- 2 558 219
- GB-A- 1 369 811
- US-A- 3 647 051

## Beschreibung

Die Erfindung bezieht sich auf eine Behälteraufgabe für eine Behälterbehandlungsmaschine, insbesondere für eine Reinigungsmaschine, welche Behälteraufgabe beispielsweise im Einlaufbereich von Behälterbehandlungsmaschinen, insbesondere Reinigungsmaschinen vorgesehen ist und eine Formatteilanordnung zur Formatanpassung aufweist.

Die Erfindung betrifft somit Behälterbehandlungsmaschinen in der Getränkeindustrie, insbesondere Behälterbehandlungsmaschinen mit Leistungen von mehr als 10000 Behältern pro Stunde. Insbesondere Behälterbehandlungsmaschinen mit einer Leistung von mehr als 50000 Behältern pro Stunde. Beispiele für derartige Behälterbehandlungsmaschinen sind z.B. Reinigungsmaschinen, Pasteurisierungsmaschinen, Anlagen zur CIP-Reinigung, Kurzzeiterhitzungsanlagen (KZE), Ultrakurzzeiterhitzungsanlagen (UKZE) usw.

Behälteraufgaben für Reinigungsmaschinen sind insbesondere in der Getränkeindustrie hinreichend bekannt und dienen dazu, Behälter, wie beispielsweise Flaschen, die zunächst stehend über einen Zuförderer in einem Behälterstrom zugeführt werden, in die Reinigungsmaschine einzubringen. Insbesondere werden die Behälter von dem Zuförderer aus zunächst an einen Einschub- oder Behälterzulaufbereich der Behälteraufgabe in dort vorgesehene Transportgassen geordnet hintereinander eingeführt und schließlich über entsprechende Mitnehmer- oder Aufgabeelemente an die Reinigungsmaschine übergeben, insbesondere in so genannte Behälterzellen eingebracht. Eine Behälteraufgabe der genannten Art ist zum Beispiel aus der DE 10 2005 011 456 A1 bekannt.

Die Behälter werden dabei über den Zuförderer der Reinigungsmaschine zunächst im Massentransport, also auf Stoß und völlig ungeordnet zugeführt und gelangen somit als ungeordneter Behälterstrom zu dem Einschub- oder Behälterzulaufbereich der Behälteraufgabe. Hier erfolgt ein Übergang von dem Massentransport, bei dem die Behälter als völlig ungeordneter Behälterstrom im Pulk angefördert werden, in einen Einzel- bzw. Gassentransport, bei dem die Behälter einzeln und in Reihe hintereinander in Gassen bzw. Gefachen oder Einzellinien transportiert und der Reinigungsmaschine zugeführt werden. Bei diesem Übergang vom Massentransport, welcher auch als Drängeltransport bezeichnet werden kann, in den Einzel- bzw. Gassentransport kann es nachteilig häufig zu Verklemmungen und Staubildungen im Übergangsbereich kommen, wodurch eine effiziente Übergabe der Behälter an die Reinigungsmaschine eingeschränkt bzw. behindert ist. Auch kommt es dabei häufig vor, dass einzelne Behälter wie z.B. Flaschen umfallen und dadurch die Staubildung oder weitere Verklemmungen begünstigen.

Für den Übergang von diesem Massentransport in den geordneten Gassentransport, und letztlich für das geordnete Einschieben der Behälter jeweils einzeln in die bekannten Behälter- bzw. Flaschenzellen, sind bei den Behälteraufgaben der Reinigungsmaschinen so genannte Behälterführungen oder Führungsbleche vorhanden, welche die Transportgassen seitlich begrenzen. Dabei wird der Zwischenraum zwischen zwei benachbart angeordneten Behälterführungen bzw. Führungsblechen als "Transportgasse für die Behälter" bezeichnet. Eine Breite der Transportgassen ist somit durch den Abstand zweier benachbarter Behälterführungen bzw. Führungsbleche vorgegeben.

Die Behälterführungen bzw. Führungsbleche weisen dabei einen Abstand zueinander auf, der es erlaubt, Behälter aller Typen und Formate eines in der jeweiligen Reinigungsmaschine zu verarbeitenden Behältersortiments durch die Transportgassen transportieren zu können. Somit ist der Abstand zweier benachbarter Behälterführungen bzw. Führungsbleche zueinander in der Regel etwas größer als ein "größter Durchmesser" eines Behältertyps oder Behälterformats des zu verarbeitenden Behältersortiments. Dadurch ist sichergestellt, dass der Behälter mit dem größten Durchmesser durch die Führungsbleche sicher und ohne umzufallen geführt wird, und somit ordnungsgemäß und zuverlässig in "seine" Behälterzelle gelangt.

Allerdings ist im bestimmten Anwendungsfall, nämlich wenn beispielsweise ein Behältertyp oder ein Behälterformat mit deutlich kleinerem Behälterdurchmesser verarbeitet wird, das Problem gegeben, dass der seitliche Abstand der Führungsbleche so groß oder breit ist, dass ein einzelner in der Transportgasse befindlicher Behälter durch die Führungsbleche nicht mehr ausreichend geführt wird, und somit beispielsweise umfallen kann, was zu erheblichen Störungen des Produktionsablaufes führen kann, und somit überaus unerwünscht ist.

Ferner kann sich bei zu breiten Transportgassen das Problem ergeben, dass die in der Transportgasse befindlichen Behälter nicht mehr zwingend direkt hintereinander stehen, sondern beispielsweise auch direkt nebeneinander oder auch in einer nestenden Anordnung angeordnet sein können, bei welcher die Behälter zueinander seitlich versetzt sind. Dies führt in besonders hohem Maße zu einem Verkanten oder Verklemmen der Behälter, was aufgrund der damit verbundenen, nur sehr schwer zu beseitigenden Produktionsstörungen ebenfalls überaus unerwünscht ist.

Aus dem Stand der Technik ist zur Lösung dieses Problems bekannt, zur Formatanpassung über so genannte Formatteile die Breite der Transportgassen so einzuengen, dass auch Behälter mit kleinerem Durchmesser sicher und problemlos geführt werden können. Derartige Formatteile können auf einen Abschnitt der Behälterführungen bzw. Führungsbleche aufgesetzt oder aufgesteckt und je nach Anwendungsfall, insbesondere je nach Typ und Format der aktuell in einem Produktionsvorgang zu verarbeitenden Behälter, ausgewechselt werden. Die bekannten Formatteile sind im Wesentlichen als profilartige Formkörper aus Kunststoff mit U-förmigem Querschnitt ausgebildet und weisen zwei Seitenwandungen mit jeweils eine definierte Seitendicken bzw. Seitenstärken auf. Im Gebrauchszustand, nämlich, wenn ein Formatteil auf einem Abschnitt der Behälterführungen bzw. Führungsbleche aufgesetzt oder aufgesteckt ist, erstrecken sich die Seitenwandungen mit ihren Seitendicken bzw. Seitenstärken in die Transportgasse hinein, wodurch deren Breite reduziert wird.

Die Formatteile im Bereich der Reinigungsmaschinen bzw. Behälteraufgaben werden somit je nach Behältergröße als Abstandshalter über das Führungsblech übergestülpt. Damit diese Formatteile fest an dem Führungsblech befestigt sind und auch von Behältern nicht gelöst werden können, dienen Befestigungsnasen, die an einem unteren Rand der Formatteile angeordnet sind. Dabei besteht zum Wechseln der Formatteile jedoch das Problem, dass die Befestigungsnasen und die Materialfestigkeit nur eine aufwendige Demontage bzw. Wechsel der Formatteile zulassen. Dabei muss eine Bedienperson unter die Befestigungsnasen greifen und die Formatteile auseinanderziehen bzw. Spreizen. Von großem Nachteil ist dabei, dass sich in diesem unteren Bereich häufig Glassplitter ansammeln, welche bei der Demontage für den Bediener ein Verletzungsrisiko darstellen.

Aus der DE 10 2006 046 556 A1, die eine Formatteilanordnung gemäß dem Oberbegriff des Anspruchs 1 offenbart, ist ein Einlauf einer Behälterbehandlungsmaschine bekannt, über den die Behälter in mehreren Gassen der Behälterbehandlungsmaschine zugeführt werden, wobei zur Anpassung einer Breite der Gassen an verschiedene Behälterdurchmesser auswechselbare Formatteile vorgesehen sind, die reiterartig auf Gassenführungen der Gassen aufgesetzt werden können.

Aufgabe der Erfindung ist es daher, eine Behälteraufgabe aufzuzeigen, die die Nachteile des Standes der Technik beseitigt und in einer gegenüber dem Stand der Technik verbesserten, insbesondere einfacheren und bedienerfreundlicheren Art und Weise das Auswechseln von Formatteilen ermöglicht und damit eine Formatanpassung zur Vermeidung von Störungen in der Behälteraufgabe erleichtert. Zur Lösung dieser Aufgabe ist eine Formatteilanordnung entsprechend den Merkmalen des Patentanspruches 1 ausgebildet. Ferner ist zur Lösung dieser Aufgabe eine Behälteraufgabe mit einer solchen Formatteilanordnung gemäß den Merkmalen des Patentanspruches 9 angegeben sowie eine Reinigungsmaschine mit einer entsprechenden Behälteraufgabe nach Patentanspruch 12. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Weiterhin werden die Patentansprüche zu einem Bestandteil der Beschreibung gemacht.

Die vorliegende Erfindung stellt eine Formatteilanordnung für eine Behälteraufgabe einer Behälterbehandlungsmaschine zum Anschließen an eine Behälterführung der Behälteraufgabe zur Verfügung. Die Formatteilanordnung weist zumindest ein blechartiges Anschlussstück und ein mit dem Anschlussstück zusammenwirkendes Formatteil auf, wobei das blechartige Anschlussstück zur fluchtenden Verbindung mit der Behälterführung der Behälteraufgabe ausgebildet ist und mit dieser verbunden werden kann. Das Formatteil ist in Form eines Profilkörpers mit einem U-förmigen Querschnitt ausgebildet und weist einen ersten und zweiten Wandungsabschnitt sowie einen die Wandungsabschnitte verbindenden Stegabschnitt auf ist lösbar und auswechselbar auf das Anschlussstück aufgesteckt, derart, dass das Anschlussstück wenigstens teilweise zwischen dem ersten und zweiten Wandungsabschnitt des Formatteils aufgenommen ist. Die Formatteilanordnung zeichnet sich insbesondere dadurch aus, dass das Formatteil federnd auf dem Anschlussstück gehalten ist, wobei das Formatteil dazu ein federndes Auflageelement zur Auflage auf einem oberen Kantenabschnitt des Anschlussstücks aufweist und zur lösbaren Befestigung ein ferner vorgesehenes Eingriffselement des Formatteils in einen im Bereich des oberen Kantenabschnittes des Anschlussstücks angeordneten, korrespondierenden Eingriffsabschnitt eingreift.

Die vorliegende Erfindung stellt ferner eine Behälteraufgabe für eine Behälterbehandlungsmaschine bereit. Die Behälteraufgabe weist einen Behälterzulauf mit mehreren parallel zueinander orientierten Transportgassen und zwischen den Transportgassen angeordneten Behälterführungen und zumindest eine an wenigstens eine der Behälterführungen angeschlossene Formatteilanordnung auf. Die Formatteilanordnung umfasst zumindest ein blechartiges Anschlussstück und ein mit dem Anschlussstück zusammenwirkendes Formatteil, wobei das blechartige Anschlussstück an einem einlaufseitigen Ende der Behälterführung fluchtend mit der Behälterführung verbunden ist und eine erste und zweite Seitenfläche des Anschlussstücks im Wesentlichen senkrecht zu einer Transportebene der Transportgasse orientiert sind. Das Formatteil ist in Form eines Profilkörpers mit einem U-förmigen Querschnitt ausgebildet und weist einen ersten und zweiten Wandungsabschnitt sowie einen die Wandungsabschnitte verbindenden Stegabschnitt auf. Das Formatteil ist lösbar auf das Anschlussstück aufgesteckt, derart, dass das Anschlussstück wenigstens teilweise zwischen dem ersten und zweiten Wandungsabschnitt des Formatteils aufgenommen ist. Die Behälteraufgabe zeichnet sich insbesondere dadurch aus, dass das Formatteil federnd auf dem Anschlussstück gehalten ist, wobei das Formatteil dazu ein federndes Auflageelement zur Auflage auf einem oberen Kantenabschnitt des Anschlussstücks aufweist und zur lösbaren Befestigung ein ferner vorgesehenes Eingriffselement des Formatteils in einen im Bereich des oberen Kantenabschnittes des Anschlussstücks angeordneten, korrespondierenden Eingriffsabschnitt eingreift.

Die vorliegende Behälteraufgabe ist auch als Zuführvorrichtung oder Beschickungsvorrichtung für eine Behälterbehandlungsmaschine, insbesondere für eine Behälterreinigungsmaschine zu verstehen und kann ebenfalls als Transfereinrichtung oder Transfervorrichtung für Behälter verstanden werden.

Mittels der Formatteilanordnung kann eine Formatanpassung der Behälteraufgabe, insbesondere eine Anpassung einer Breite der Transportgassen erfolgen. Dazu ist das Formatteil auswechselbar und lösbar mit dem Anschlussstück verbunden, so dass ein schnelles und einfaches Wechseln möglich ist. Dieses schnelle und einfache Wechseln kann insbesondere dadurch erfolgen, da das Formatteil durch eine Federkraft und den entsprechenden, oberseitig angeordneten Eingriffsmechanismus auf dem Anschlussstück angeordnet und gehalten ist.

Der Eingriffsmechanismus, nämlich die in den Eingriffsabschnitt eingreifenden Eingriffselemente, sind im Sinne der vorliegenden Erfindung auch als Sicherungsmechanismus, oder Befestigungs- bzw. Arretierungsmechanismus oder als Verriegelungsmechanismus zu verstehen, welcher in Zusammenwirkung mit der Federkraft der federnden Auflageelemente insbesondere einfach und sicher hergestellt und gelöst werden kann.

Ganz besonders vorteilhaft ist dadurch bei der erfindungsgemäßen Behälteraufgabe das Auswechseln der Formatteile und damit die Formatanpassung der Behälteraufgabe in einer einfachen und für die Bedienperson sichere Weise möglich, ohne dass eine Verletzungsgefahr besteht. Ein Hineingreifen in den unteren Bereich der Formatteilanordnung durch das Bedienpersonal wird effektiv vermieden. Das Verletzungsrisiko für das Bedienpersonal ist enorm verringert, die Handhabung vereinfacht und der Zeitbedarf reduziert.

Es versteht sich, dass an mehreren, vorzugsweise an sämtlichen Behälterführungen Formatteilanordnungen vorgesehen sind.

Bevorzugt ist das Eingriffselement des Formatteils durch zumindest einen von einer Wandungsinnenseite des ersten Wandungsabschnittes hervorstehenden zapfen- oder nasenartigen Vorsprung gebildet. Insbesondere bevorzugt ist dabei der im Bereich des oberen Kantenabschnittes angeordnete Eingriffsabschnitt des Anschlussstücks durch eine Eingriffsnut gebildet, wobei sich die Eingriffsnut ausgehend von einer Oberkante des Anschlussstücks nach unten erstreckt und eine an der Oberkante angeordnete Nuteingangsöffnung aufweist.

Gemäß einer ganz besonders bevorzugten Ausführungsform ist die Eingriffsnut im Wesentlichen hakenförmig ausgebildet und weist einen an die Nuteingangsöffnung anschließenden Eingangsabschnitt, einen an den Eingangsabschnitt anschließenden Umlenkabschnitt und einen an den Umlenkabschnitt anschließenden Verriegelungsabschnitt auf.

Besonders bevorzugt erstreckt sich der Eingangsabschnitt der Eingriffsnut von der Oberkante des Anschlussstücks aus entlang einer ersten Nutachse nach unten und der Umlenkabschnitt erstreckt sich im Winkel zum Eingangsabschnitt entlang einer zweiten Nutachse und der Verriegelungsabschnitt erstreckt sich im Winkel zum Umlenkabschnitt entlang einer dritten Nutachse. Dabei ist die erste Nutachse bevorzugt im Wesentlichen senkrecht zur zweiten Nutachse und parallel zur dritten Nutachse orientiert.

Gemäß einer vorteilhaften Ausführungsvariante ist das federnde Auflageelement des Formatteils durch ein an einer Innenseite des Stegabschnittes angeordnetes Federelement gebildet. Als Federelement sind dem Fachmann bekannte Federelemente verwendbar. Ein solches Federelement kann beispielsweise ein an der Innenseite des Stegabschnittes angeordnetes oder angeformtes Federelement, beispielsweise ein bogenförmiges Bandfederelement, ein Spiralfederelement oder aber ein aus einem elastischen Material geformter Vorsprung oder Körper sein.

Vorzugsweise ist das Anschlussstück mit seinem dem oberen Kantenabschnitt gegenüberliegenden unteren Kantenabschnitt über ein Befestigungselement an einem tragenden Bauteil des Behälterzulaufs befestigt, wodurch ein besonders fester Halt der Formatteilanordnung gewährleistet ist.

Das Anschlussstück kann ferner durch einen Abschnitt der Behälterführung gebildet und einstückig mit dieser ausgebildet sein. Dabei ist das Anschlussstück im Wesentlichen als freiendseitiges Ende der Behälterführung zu verstehen.

Das Formatteil ist vorzugsweise aus einem Kunststoff hergestellt. Das Anschlussstück ist vorzugsweise aus einem Metall, insbesondere aus einem Metallblech hergestellt und kann beispielsweise in bevorzugten Ausführungsvarianten in nicht rostendem Stahl, insbesondere Edelstahl ausgeführt sein.

Ferner umfasst die Erfindung auch eine Behälterbehandlungsmaschine, insbesondere Reinigungsmaschine für Behälter, mit einer Behälteraufgabe wie oberhalb beschrieben.

Die Erfindung wird im Folgenden anhand der Figuren an Ausführungsbeispielen näher erläutert. Es zeigen:
- Fig. 1: in einer Draufsicht von oben grob schematisch dargestellt eine bevorzugte Ausführungsform der Behälteraufgabe gemäß der Erfindung,
- Fig. 2: grob schematisch dargestellt die Behälteraufgabe der Figur 1 in einer Frontalansicht;
- Fig. 3: grob schematisch dargestellt eine Ansicht der Behälteraufgabe entlang der Linie A-A der Figur 2;
- Fig. 4: in einer vergrößerten Darstellung der in Figur 3 angedeutete Ausschnitt Z;
- Fig. 5a: in einer schematischen Seitenansicht ein Formatteil einer Ausführungsform gemäß der Erfindung;
- Fig. 5b: eine stirnseitige Ansicht des Formatteils der Figur 5a;
- Fig. 5c: eine Ansicht des Formatteils geschnitten entlang der Linie A-A der Figur 5b, und somit in Draufsicht auf die Wandungsinnenseite;
- Fig. 6: in einer schematischen Seitenansicht ein mit einer Behälterführung verbundenes Anschlussstück einer Ausführungsform gemäß der Erfindung;
- Fig. 7: in einer vergrößerten Darstellung der in Figur 6 angedeutete Ausschnitt Y und
- Fig. 8: in stark vereinfachter Darstellung ein Schema eines Vorganges beim Wechseln des Formatteils.

Die in den Figuren allgemein mit 1 bezeichnete Behälteraufgabe ist insbesondere als eine Förder- bzw. Transporteinrichtung oder Beschickungsvorrichtung für eine in den Figuren nicht näher gezeigte Behälterbehandlungsmaschine, insbesondere für eine Behälterreinigungsmaschine zu verstehen, welche Behälterreinigungsmaschine vorliegend kurz als Reinigungsmaschine bezeichnet wird. Die Behälter sind im vorliegenden Sinne insbesondere Flaschen, beispielsweise Glasflaschen für Getränke, nämlich Getränkeflaschen, vorzugsweise Mehrwegflaschen. Die Behälteraufgabe 1 dient dabei insbesondere dem Transport und der Übergabe der Behälter an Behälterzellen der Reinigungsmaschine, wobei diese Übergabe vorzugsweise mittels nicht näher in den Figuren spezifizierte Mitnehmer- oder Aufgabeelemente der vorliegenden Behälteraufgabe 1 erfolgt.

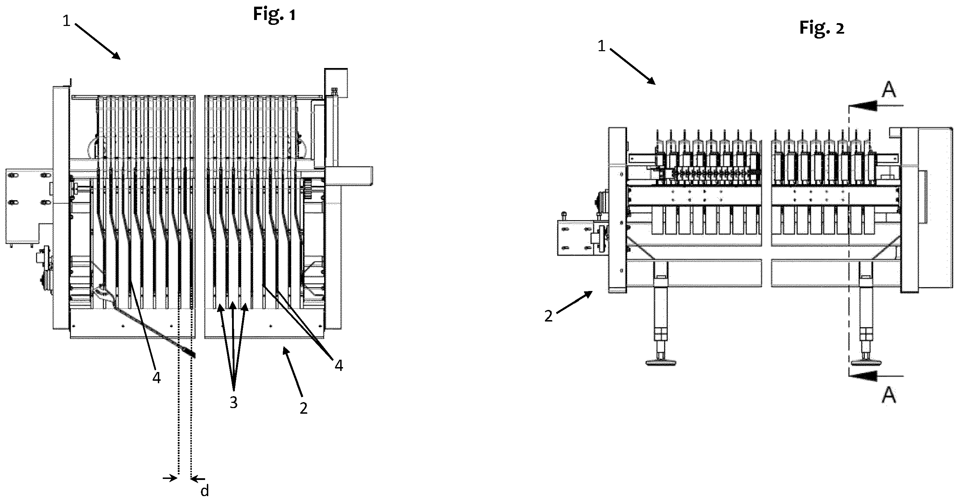

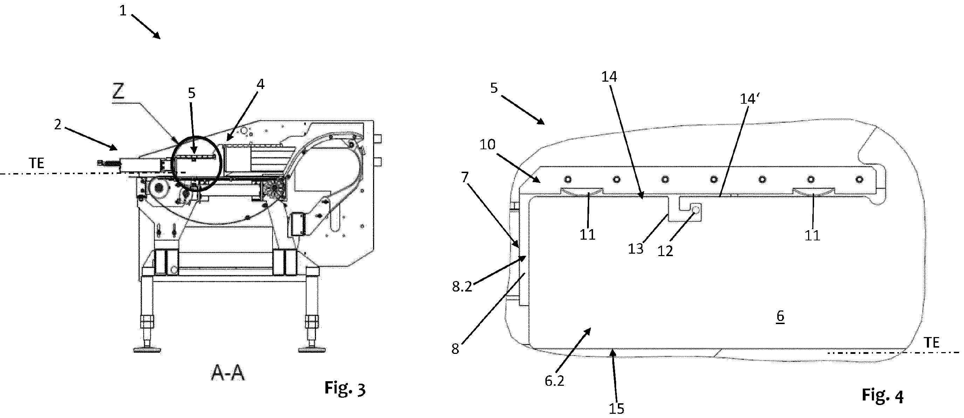

Eine Ausführungsvariante einer erfindungsgemäßen Behälteraufgabe 1 ist grob schematisch und vereinfacht in den Figuren 1 bis 3 dargestellt, wobei Figur 1 die Behälteraufgabe 1 in einer Draufsicht von oben und Figur 2 in einer Frontalansicht, nämlich in einer Ansicht von vorne auf einen Behälterzulauf 2 der Behälteraufgabe 1 zeigt. In Figur 3 ist die Behälteraufgabe 1 in einer Ansicht entlang der Linie A-A der Figur 2 dargestellt. Aus Darstellungsgründen und aus Gründen der Übersichtlichkeit sind bei den Figuren 1 bis 3 manche Elemente zumindest teilweise geschnitten oder angeschnitten dargestellt bzw. eigentlich verdeckte Elemente sichtbar gemacht.

Über eine nicht in den Figuren dargestellte Vorrichtung zum Zufördern der Behälter, welche auch als Zuförderer oder als Transporter bezeichnet werden kann, werden die Behälter stehend, beispielsweise auf einem Förderband, der Behälteraufgabe 1, insbesondere einem einlaufseitig angeordneten Behälterzulauf 2 zugeführt. Beispielsweise können die Behälter über ein so genanntes Überschubblech von dem Zuförderer auf den Behälterzulauf 2 übergeschoben werden. Der einlaufseitig an der Behälteraufgabe 1 angeordnete Behälterzulauf 2 kann auch als Behältereinlauf bzw. Einlaufabschnitt oder als Transfer- bzw. Übernahmebereich der Behälteraufgabe 1 verstanden werden. Der (nicht dargestellte und nicht näher spezifizierte) Zuförderer transportiert die Behälter pulkweise im Massentransport, so dass die Behälter vom Zuförderer aus in der Regel in einem völlig ungeordneten vielspurigen Behälterstrom am Behälterzulauf 2 der Behälteraufgabe 1 ankommen. Dieser Massentransport kann auch als Drängeltransport oder Transport auf Stoß verstanden werden.

Der Bereich des Behälterzulaufs 2 der Behälteraufgabe 1 dient dazu, die Behälter aus dem Massentransport in einen so genannten Gassentransport zu leiten. Dazu ist der Behälterzulauf 2 zum Weitertransportieren der Behälter in einzelnen geordneten Linien, nämlich zum vereinzelten Transportieren der Behälter in speziell vorgesehenen Transportgassen 3 ausgebildet, mit welchen der Behälterzulauf 2 der Behälteraufgabe 1 ausgestattet ist. Die Behälter werden dabei geordnet, einzeln hintereinander gereiht und transportiert. Die in einer Vielzahl vorhanden Transportgassen 3 sind vorzugsweise parallel zueinander orientiert und können vorliegend auch als Gefache oder auch als Einschubgassen verstanden werden, wobei jede der einzelnen, vorzugsweise parallelen Transportgassen 3 über einen entsprechenden Gasseneingang oder Gefacheeingang verfügt.

Die Behälter werden zunächst immer noch stehend durch die Transportgassen 3 bewegt, wobei für den Transport der Behälter in den Transportgassen 3 vorzugsweise zumindest ein Transportmittel vorgesehen ist, welches als angetriebenes Transportband ausgebildet sein kann. Alternativ ist es auch möglich, eine Gruppe mehrerer, paralleler Einzelbänder vorzusehen, welche einzeln oder gemeinsam angetrieben werden können. Vorzugsweise ist eine der Anzahl der Transportgassen 3 entsprechende Anzahl von angetriebenen, bevorzugt parallel verlaufenden Transportbändern oder Einschubbändern vorhanden, wie dies dem Fachmann bekannt ist. Das Transportmittel, insbesondere die Transportbänder oder Einschubbänder, welche aus Gründen der Übersichtlichkeit in den Figuren nicht näher bezeichnet sind, bilden dabei eine Transportebene TE.

Da die Behälter letztlich geordnet und jeweils einzeln in die bekannten Flaschenzellen eingeschoben werden müssen, sind bei der Behälteraufgabe 1 zur Einteilung der Behälter in die Transportgassen 3 Behälterführungen 4 vorgesehen, die vorzugsweise parallel zueinander angeordnet sind. Diese Behälterführungen 4 können vorliegend auch als Führungsbleche oder Trennelemente bzw. Trennbleche bezeichnet werden. Zwei benachbart angeordnete Behälterführungen begrenzen somit einen dazwischenliegenden Zwischenraum, wobei die zwischen jeweils zwei benachbarten Behälterführungen 4 angeordneten Zwischenräume die Transportgassen 3 definieren. Ein Abstand d zwischen zwei benachbarten Behälterführungen 4 entspricht daher einer Breite der Transportgassen 3.

Vorzugsweise sind die Behälterführungen 4 in einem Abstand d zueinander angeordnet, der es erlaubt, Behälter aller Typen und Formate eines in der jeweiligen Reinigungsmaschine zu verarbeitenden Behältersortiments durch die Transportgassen 3 transportieren zu können. Somit ist der Abstand zweier benachbarter Behälterführungen 4 etwas größer als ein "größter Durchmesser" eines Behältertyps oder Behälterformats des zu verarbeitenden Behältersortiments.

Zur Formatanpassung an Behältertypen mit kleinerem Durchmesser, ist eine an die Behälterführungen 4 angeschlossene Formatteilanordnung 5 mit auswechselbaren Formatteilen 7 vorgesehen. Eine entsprechende Formatteilanordnung 5 ist in Figur 4 gezeigt, welche den in Figur 3 angedeuteten Ausschnitt Z schematisch wiedergibt, wobei die Formatteilanordnung 5 in Figur 4 geschnitten dargestellt ist.

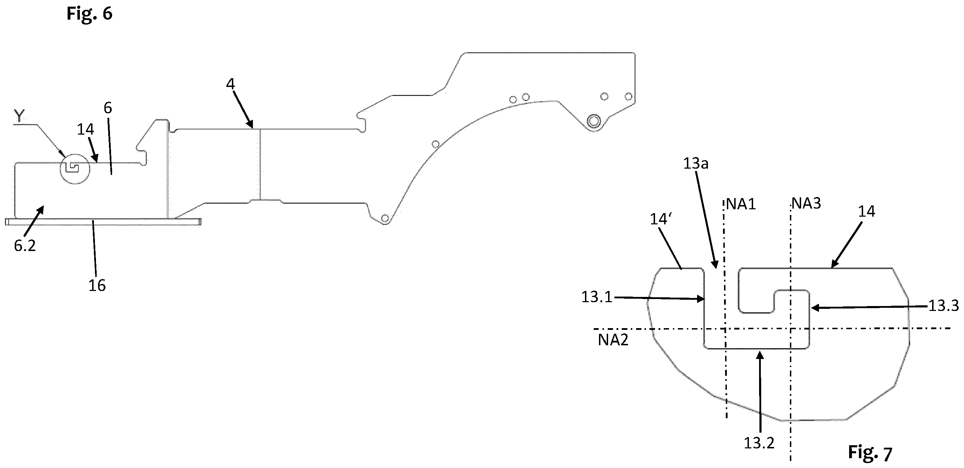

Die Formatteilanordnung 5 umfasst ein flaches, blechartiges Anschlussstück 6 und das mit dem Anschlussstück 6 zusammenwirkende Formatteil 7. Das Anschlussstück 6, welches im Detail in den Figuren 6 und 7 gezeigt ist, weist eine erste und zweite Seitenfläche auf, von denen in den Figuren lediglich die zweite Seitenfläche 6.2 sichtbar ist. In der dargestellten Variante ist das Anschlussstück 6 fluchtend mit der Behälterführung 4 ausgerichtet und fest mit dieser verbunden und bildet quasi einen freiendseitigen Bereich der Behälterführung 4. Das Anschlussstück ist so ausgerichtet, dass die erste und zweite Seitenfläche im Wesentlichen senkrecht zur Transportebene TE der Transportgasse 3 orientiert sind und ein oberer Kantenabschnitt 14 nach oben weist und der Transportebene TE abgewandt ist.

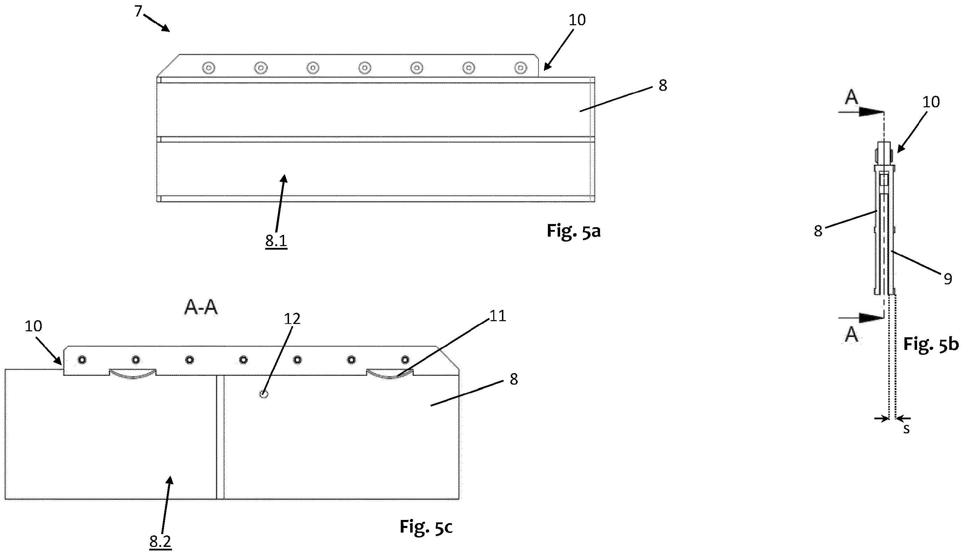

Das mit dem Anschlussstück 6 zusammenwirkende Formatteil 7 welches in den Figuren 5a bis 5c detaillierter dargestellt ist, ist lösbar und auswechselbar an dem Anschlussstück 6 befestigt bzw. gehalten. Das Formatteil 7 ist in Form eines Profilkörpers mit einem im Wesentlichen U-förmigen Querschnitt ausgebildet und weist einen ersten und zweiten Wandungsabschnitt 8, 9 sowie einen die Wandungsabschnitte 8, 9 verbindenden Stegabschnitt 10 auf. Zwischen den Wandungsabschnitten 8, 9 ist ein freier Raum ausgebildet, der einen Aufnahmeraum für das Anschlussstück 6 bildet, so dass das Formatteil 7 auswechselbar auf das Anschlussstück 6 aufgesetzt bzw. aufgesteckt werden kann bzw. vom oberen Kantenabschnitt 14 des Anschlussstücks 6 her über dieses übergestülpt werden kann, so dass das Anschlussstück 6 wenigstens teilweise zwischen dem ersten und zweiten Wandungsabschnitt 8, 9 des Formatteils 7 aufgenommen ist. Aufgrund einer Wandstärke s der Wandungsabschnitte 8, 9 ist dadurch die Breite der Transportgasse 3 verringert, wodurch auch Behälter kleineren Durchmessers sicher geführt werden.

Erfindungsgemäß ist das Formatteil 7 federnd auf dem Anschlussstück 6 gehalten. Dazu umfasst das Formatteil 7 ein im Bereich des Verbindungsabschnittes 10 angeordnetes federndes Auflageelement 11, im dargestellten Beispiel sind es zwei federnde Auflageelemente, die auf einer Oberkante 14' des Anschlussstücks 6 aufliegen und das Formatteil 7 federnd gegen das Anschlussstück 6 lagern. Zur lösbaren Befestigung bzw. Halterung des federnd gelagerten Formatteils 7 am Anschlussstück 6 weist das Formatteil 7 an einer Wandungsinnenseite 8.2 des ersten Wandungsabschnittes 8 ein Eingriffselement 12 auf, welches auch als Arretiermittel verstanden werden kann und im dargestellten Beispiel durch einen von der Wandungsinnenseite 8.2 hervorstehenden zapfen- oder nasenartigen Vorsprung, nämlich einem Eingriffszapfen gebildet ist.

Das Eingriffselement 12 des Formatteils 7 ist dabei in einem dem Stegabschnitt 10 benachbarten oberen Bereich des ersten Wandungsabschnittes 8 angeordnet und ist damit im Bereich des, der Transportebene TE entfernt liegenden, oberen Endes der Formatteilanordnung 5 vorgesehen. Zur Befestigung bzw. Halterung greift das Eingriffselement 12 in einen im Bereich des oberen Kantenabschnittes 14 des Anschlussstücks 6 angeordneten, korrespondierenden Eingriffsabschnitt 13 ein, welcher im dargestellten Beispiel durch eine Eingriffsnut gebildet ist. Die Eingriffsnut 13 ist in Figur 7 vergrößert, im Detail dargestellt.

Die Eingriffsnut 13 ist im dargestellten Beispiel als eine von der ersten bis zur zweiten Seitenfläche des Anschlussstücks durchgehende Nut bzw. Ausnehmung ausgeführt, so dass die Eingriffsnut 13 auch als Durchbrechung oder Eingriffsdurchbrechung verstanden werden kann. Die Eingriffsnut 13 erstreckt sich ausgehend von der Oberkante 14' des Anschlussstücks 6 nach unten weist eine an der Oberkante 14' angeordnete Nuteingangsöffnung 13a auf, so dass die Eingriffsnut 13 von oben her, nämlich über die Oberkante 14' zugänglich ist.

Insbesondere ist die Eingriffsnut 13 des dargestellten Beispiels im Wesentlichen hakenförmig ausgebildet und umfasst einen an die Nuteingangsöffnung 13a anschließenden Eingangsabschnitt 13.1, der sich entlang einer senkrecht zur Oberkante 14' orientierten ersten Nutachse NA1 nach unten erstreckt, einen im rechten Winkel an den Eingangsabschnitt 13.1 anschließenden Umlenkabschnitt 13.2, der sich entlang einer senkrecht zur ersten Nutachse NA1 orientierten zweiten Nutachse NA2 erstreckt und einen wiederum rechtwinkelig an den Umlenkabschnitt 13.2 anschließenden Verriegelungsabschnitt 13.3, der sich entlang einer parallel zur ersten Nutachse NA1 orientierten dritten Nutachse NA3 erstreckt.

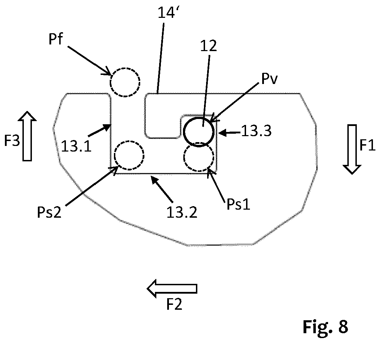

Anhand des in Figur 8 stark vereinfacht dargestellten Schemas, wird nun mehr im Detail das Vorgehen zum Auswechseln des Formatteils 7 beschrieben, insbesondere das Herstellen und/oder Lösen der lösbaren Verbindung zwischen den zusammenwirkenden Teilen der Formatteilanordnung 5.

In Figur 8 ist lediglich die Eingriffsnut 13 und das korrespondierende, in die Eingriffsnut 13 eingreifende Eingriffselement 12 explizit dargestellt. Sämtliche weiteren Bestandteile der Formatteilanordnung 5 sind in der Darstellung der Figur 8 aus Gründen der Vereinfachung weggelassen. Ein verbundener, verriegelter Zustand, in dem das Formatteil 7 fest auf dem Anschlussstück 6 befestigt bzw. gehalten ist, wird in der Figur 8 durch eine Verriegelungsposition Pv angedeutet (Eingriffselement 12 mit durchgezogener Linie dargestellt), in der sich das Eingriffselement 12 in einer Endposition in dem Verriegelungsabschnitt 13.3 der Eingriffsnut 13 befindet.

Zum Auswechseln des Formatteils 7 kann das Bedienpersonal das Formatteil 7 auf dessen Oberseite, nämlich im Bereich des, der Transportebene TE abgewandten Verbindungsabschnittes 10 greifen und nach unten drücken, wodurch eine nach unten wirkende Kraft F1 in Richtung der Transportebene TE aufgebracht wird, welche Kraft F1 entgegen der Federkraft bzw. Spannkraft des federnden Auflageelementes 11, nämlich des Federelementes wirkt. Das heißt, sobald die Bedienperson beim "Nach-unten-drücken" die Federkraft überwindet wird das Eingriffselement 12 im Verriegelungsabschnitt 13.3 nach unten bewegt bis es eine erste abgesenkte Position Ps1 einnimmt, von der aus das Eingriffselement 12 durch eine Verschiebekraft F2 in den Umlenkabschnitt 13.2 eingeführt werden kann. Durch das mit Aufbringen der Verschiebekraft F2 erfolgende Verschieben in horizontaler Richtung gelangt das Eingriffselement 12 in eine zweite abgesenkte Position Ps2, von der aus das Eingriffselement 12 durch den Eingangsabschnitt 13.1 nach oben in Richtung der Nuteingangsöffnung 13a bewegt werden kann, bis es in einer Freigabeposition Pf ganz von der Eingriffsnut 13 freigegeben ist. Dazu ist eine nach oben gerichtete Kraft F3 nötig, die sich schließlich zusammensetzt aus der Federkraft bzw. Spannkraft des federnden Auflageelementes 11 und einem unterstützenden Anheben des Formatteils 7 durch das Bedienpersonal.

Es versteht sich von selbst, dass das Herstellen der Verbindung von Formatteil 7 und Anschlussstück 6 vice versa funktioniert, wobei die Bewegungen sowie der Aufwand der Kräfte in umgekehrter Reihenfolge und Richtung erfolgen.

Gegenüber dem bisher bekannten Stand der Technik ergibt sich mit der vorliegenden Erfindung insbesondere ein Vorteil durch verbesserte Sicherheit und Handhabbarkeit beim Wechseln der Formatteile. Bei dem bisher bekannten Stand der Technik sind die Formatteile 7 dadurch fest am Anschlussstück 6 befestigt, dass an einer der Transportebene TE zugewandten und dieser benachbarten unteren Seite der Formatteile 7 Befestigungsnasen vorgesehen sind, die in korrespondierende, im Bereich der Unterkante des Anschlussstücks 6 vorgesehene Langlöcher eingreifen. Die Materialfestigkeit lässt dabei nur eine aufwendige Demontage bzw. Wechsel der Formatteile zu, wobei eine Bedienperson dazu unter die Befestigungsnasen greifen und die Formatteile auseinanderziehen und schließlich von unten her, möglichst unter Aufrechterhaltung der Spreizung, vom Anschlussstück abheben muss. Dies ist nicht nur aufwendig und erfordert besonderes Geschick, sondern es besteht zudem die Gefahr, dass sich in diesem unteren Bereich Glassplitter ablegen, so dass die Demontage bzw. das Auswechseln der Formatteile ein enormes Verletzungsrisiko des Bedienpersonals darstellen.

Ganz besonders vorteilhaft ist bei der erfindungsgemäßen Behälteraufgabe 1 das Auswechseln der Formatteile 7 und damit die Formatanpassung der Behälteraufgabe 1 in einer einfachen und für die Bedienperson sichere Weise möglich, ohne dass eine Verletzungsgefahr besteht. Ein Hineingreifen in den unteren Bereich der Formatteilanordnung durch das Bedienpersonal ist effektiv vermieden. Das Verletzungsrisiko für das Bedienpersonal ist enorm verringert, die Handhabung vereinfacht und der Zeitbedarf reduziert.

### Bezugszeichenliste

- 1: Behälteraufgabe
- 2: Behälterzulauf
- 3: Transportgassen
- 4: Behälterführungen
- 5: Formatteilanordnung
- 6: Anschlussstück
- 6.2: zweite Seitenfläche
- 7: Formatteil
- 8: erster Wandungsabschnitt
- 8.1: Wandungsaußenseite
- 8.2: Wandungsinnenseite
- 9: zweiter Wandungsabschnitt
- 10: Stegabschnitt
- 10.1: Innenseite des Stegabschnitts
- 11: federndes Auflageelement
- 12: Eingriffselement
- 13: Eingriffsabschnitt
- 13a: Nuteingriffsöffnung
- 13.1: Eingangsabschnitt
- 13.2: Umlenkabschnitt
- 13.3: Verriegelungsabschnitt
- 14: oberer Kantenabschnitt
- 14': Oberkante
- 15: unterer Kantenabschnitt
- 16: Befestigungselement

- d: Abstand zwischen benachbarten Behälterführungen
- F1, F2, F3: Kraft
- Pf: Freigabeposition
- Ps1, Ps2: erste und zweite abgesenkte Position
- Pv: Verriegelungsposition
- s: Wandstärke
- TE: Transportebene

## Patentansprüche

1. Formatteilanordnung (5) für eine Behälteraufgabe (1) einer Behälterbehandlungsmaschine zum Anschließen an eine Behälterführung (4) der Behälteraufgabe (1), aufweisend zumindest ein blechartiges Anschlussstück (6) und ein mit dem Anschlussstück (6) zusammenwirkendes Formatteil (7), wobei das blechartige Anschlussstück (6) zur fluchtenden Verbindung mit der Behälterführung (4) der Behälteraufgabe (1)ausgebildet ist, wobei das Formatteil (7) in Form eines Profilkörpers mit einem U-förmigen Querschnitt ausgebildet ist und einen ersten und zweiten Wandungsabschnitt (8, 9) sowie einen die Wandungsabschnitte (8, 9) verbindenden Stegabschnitt (10) aufweist und wobei das Formatteil (7) lösbar auf das Anschlussstück (6) aufgesteckt ist, derart dass das Anschlussstück (6) wenigstens teilweise zwischen dem ersten und zweiten Wandungsabschnitt (8, 9) des Formatteils (7) aufgenommen ist, **dadurch gekennzeichnet, dass** das Formatteil (7) federnd auf dem Anschlussteil (6) gehalten ist, wobei das Formatteil (7) dazu ein federndes Auflageelement (11) zur Auflage auf einem oberen Kantenabschnitt (14) des Anschlussstücks (6) aufweist und zur lösbaren Befestigung ein ferner vorgesehenes Eingriffselement (12) des Formatteils (7) in einen im Bereich des oberen Kantenabschnittes (14) des Anschlussteils (6) angeordneten, korrespondierenden Eingriffsabschnitt (13) eingreift.

2. Formatteilanordnung (5) nach Anspruch 1, **dadurch gekennzeichnet, dass** das Eingriffselement (12) des Formatteils (7) durch zumindest einen von einer Wandungsinnenseite (8.2) des ersten Wandungsabschnittes (8) hervorstehenden zapfen- oder nasenartigen Vorsprung gebildet ist.

3. Formatteilanordnung (5) nach Anspruch 1 oder 2, **dadurch gekennzeichnet, dass** der im Bereich des oberen Kantenabschnittes (14) angeordnete Eingriffsabschnitt (13) des Anschlussstücks (6) durch eine Eingriffsnut gebildet ist, wobei sich die Eingriffsnut (13) ausgehend von einer Oberkante (14') des Anschlussstücks (6) nach unten erstreckt und eine an der Oberkante (14') angeordnete Nuteingangsöffnung (13a) aufweist.

4. Formatteilanordnung (5) nach Anspruch 3, **dadurch gekennzeichnet, dass** die Eingriffsnut (13) hakenförmig ausgebildet ist und einen an die Nuteingangsöffnung (13a) anschließenden Eingangsabschnitt (13.1), einen an den Eingangsabschnitt (13.1) anschließenden Umlenkabschnitt (13.2) und einen an den Umlenkabschnitt (13.1) anschließenden Verriegelungsabschnitt (13.3) aufweist.

5. Formatteilanordnung (5) nach Anspruch 4, **dadurch gekennzeichnet, dass** sich der Eingangsabschnitt (13.1) der Eingriffsnut (13) von der Oberkante (14') des Anschlussstücks (6) aus entlang einer ersten Nutachse (NA1) nach unten erstreckt, dass sich der Umlenkabschnitt (13.2) im Winkel zum Eingangsabschnitt (13.1) entlang einer zweiten Nutachse (NA2) erstreckt und dass sich der Verriegelungsabschnitt (13.3) im Winkel zum Umlenkabschnitt (13.2) entlang einer dritten Nutachse (NA3) erstreckt.

6. Formatteilanordnung (5) nach Anspruch 5, **dadurch gekennzeichnet, dass** die erste Nutachse (NA1) senkrecht zur zweiten Nutachse (NA2) und parallel zur dritten Nutachse (NA3) orientiert ist

7. Formatteilanordnung (5) nach einem der vorhergehenden Ansprüche, **dadurch gekennzeichnet, dass** das federnde Auflageelement (11) des Formatteils (7) durch ein an einer Innenseite (10.1) des Stegabschnittes (10) angeordnetes Federelement gebildet ist.

8. Formatteilanordnung (5) nach einem der vorhergehenden Ansprüche, **dadurch gekennzeichnet, dass** das Formatteil (7) aus einem Kunststoff hergestellt ist und/oder dass das Anschlussstück (6) aus einem Metall, insbesondere aus einem Metallblech hergestellt ist.

9. Behälteraufgabe (1) für eine Behälterbehandlungsmaschine aufweisend einen Behälterzulauf (2) mit mehreren parallel zueinander orientierten Transportgassen (3) und zwischen den Transportgassen (3) angeordneten Behälterführungen (4) und zumindest eine an wenigstens eine der Behälterführungen (4) angeschlossene Formatteilanordnung (5) gemäß einem der vorhergehenden Ansprüche 1 bis 8, wobei die Formatteilanordnung (5) zumindest ein blechartiges Anschlussstück (6) und ein mit dem Anschlussstück (6) zusammenwirkendes Formatteil (7) aufweist, wobei das blechartige Anschlussstück (6) an einem einlaufseitigen Ende der Behälterführung (4) fluchtend mit der Behälterführung (4) verbunden ist und eine erste und zweite Seitenfläche des Anschlussstücks (6) senkrecht zu einer Transportebene (TE) der Transportgasse orientiert sind, wobei das Formatteil (7) in Form eines Profilkörpers mit einem U-förmigen Querschnitt ausgebildet ist und einen ersten und zweiten Wandungsabschnitt (8, 9) sowie einen die Wandungsabschnitte (8, 9) verbindenden Stegabschnitt (10) aufweist und wobei das Formatteil (7) lösbar auf das Anschlussstück (6) aufgesteckt ist, derart dass das Anschlussstück (6) wenigstens teilweise zwischen dem ersten und zweiten Wandungsabschnitt (8, 9) des Formatteils (7) aufgenommen ist, **dadurch gekennzeichnet, dass** das Formatteil (7) federnd auf dem Anschlussteil (6) gehalten ist, wobei das Formatteil (7) dazu ein federndes Auflageelement (11) zur Auflage auf einem oberen Kantenabschnitt (14) des Anschlussstücks (6) aufweist und zur lösbaren Befestigung ein ferner vorgesehenes Eingriffselement (12) des Formatteils (7) in einen im Bereich des oberen Kantenabschnittes (14) des Anschlussteils (6) angeordneten, korrespondierenden Eingriffsabschnitt (13) eingreift.

10. Behälteraufgabe (1) nach Anspruch 9, **dadurch gekennzeichnet, dass** das Anschlussstück (6) mit seinem dem oberen Kantenabschnitt (14) gegenüberliegenden unteren Kantenabschnitt (15) über ein Befestigungselement (16) an einem tragenden Bauteil eines Behälterzulaufs (2) befestigt ist.

11. Behälteraufgabe (1) nach Anspruch 9 oder 10, **dadurch gekennzeichnet, dass** das Anschlussstück (6) durch einen Abschnitt der Behälterführung (4) gebildet ist und zusammen mit der Behälterführung (4) einstückig ausgebildet ist.

12. Behälterbehandlungsmaschine, insbesondere Reinigungsmaschine für Behälter, mit einer Behälteraufgabe (1) gemäß einem der Ansprüche 9 bis 11.

## Claims

1. Format part arrangement (5) for a container supply system (1) of a container treatment machine, for connecting to a container guide (4) of the container supply system (1), comprising at least one plate-type connection piece (6) and a format part (7) interacting with the connection piece (6), wherein the plate-type connection piece (6) is configured to form a flush connection to the container guide (4) of the container supply system (1), wherein the format part (7) is configured in the form of a profile body with a U-shaped cross-section and comprises first and second wall sections (8, 9) as well as a web section (10) connecting the wall sections (8, 9), and wherein the format part (7) is placed in a detachable manner onto the connection piece (6) in such a way that the connection piece (6) is received at least in part between the first and second wall sections (8, 9) of the format part (7), **characterised in that** the format part (7) is held with spring effect on the connection piece (6), wherein, for this purpose, the format part (7) comprises a spring contact element (11) for contact on an upper edge section (14) of the connection piece (6) and, for detachable securing, an engagement element (12) of the format part (7) is further provided and engages into a corresponding engagement section (13), arranged in the region of the upper edge section (14) of the connection part (6).

2. Format part arrangement (5) according to claim 1, **characterised in that** the engagement element (12) of the format part (7) is formed by at least one projection in the form of a pin or nose and projecting from a wall inner side (8.2) of the first wall section (8).

3. Format part arrangement (5) according to claim 1 or 2, **characterised in that** the engagement section (13) of the connection piece (6), arranged in the region of the upper edge section (14), is formed by an engagement groove, wherein the engagement groove (13) extends downwards starting from an upper edge (14') of the connection piece (6) and comprises a groove inlet opening (13a) arranged at the upper edge (14').

4. Format part arrangement (5) according to claim 3, **characterised in that** the engagement groove (13) is configured in a hook shape, and comprises an inlet section (13.1) connecting to the groove inlet opening (13a), a deflection section (13.2) connecting to the inlet section (13.1), and a locking section (13.3) connecting to the deflection section (13.2).

5. Format part arrangement (5) according to claim 4, **characterised in that** the engagement section (13.1) of the engagement groove (13) extends from the upper edge (14') of the connection piece (6) and downwards along a first groove axis (NA1), that the deflection section (13.2) extends at an angle to the engagement section (13.1) along a second groove axis (NA2), and that the locking section (13.3) extends at an angle to the deflection section (13.2) along a third groove axis (NA3).

6. Format part arrangement (5) according to claim 5, **characterised in that** the first groove axis (NA1) is oriented perpendicular to the second groove axis (NA2) and parallel to the third groove axis (NA3).

7. Format part arrangement (5) according to any one of the preceding claims, **characterised in that** the spring contact element (11) of the format part (7) is formed by a spring element arranged on an inner side (10.1) of the web section (10).

8. Format part arrangement (5) according to any one of the preceding claims, **characterised in that** the format part (7) is made of a plastic, and/or that the connection piece (6) is made of a metal, in particular from a sheet metal.

9. Container supply system (1) for a container treatment machine, comprising a container inlet (2) with several transport channels (3) oriented parallel to one another, and container guides (4) arranged between the transport channels (3), and at least one format part arrangement (5) connected to at least one of the container guides (4), according to any one of the preceding claims 1 to 8, wherein the format part arrangement (5) comprises at least one plate-type connection piece (6), and a format part (7) interacting with the connection piece (6), wherein the plate-type connection piece (6) is connected to an inlet-side end of the container guide (4), flush with the container guide (4), and first and second side surfaces of the connection piece (6) are oriented perpendicular to a transport plane (TE) of the transport channel, wherein the format part (7) is configured in the form of a profile body with a U-shaped cross-section, and comprises first and second wall sections (8, 9), as well as a web section (10) connecting the wall sections (8, 9), and wherein the format part (7) is detachably placed onto the connection piece (6), in such a way that the connection piece (6) is received at least in part between the first and second wall sections (8, 9) of the format part (7), **characterised in that** the format part (7) is held with spring effect on the connection part (6), wherein, for this purpose, the format part (7) comprises a spring contact element (11) for contact on an upper edge section (14) of the connection piece (6), and, to provide the detachable securing, a further engagement element (12) of the format part (7) is provided and engages into a corresponding engagement section (13) arranged in the region of the upper edge section (14) of the connection piece (6).

10. Container supply system (1) according to claim 9, **characterised in that** the connection piece (6) is secured with its lower edge section (15), opposite the upper edge section (14), by means of a securing element (16) to a load-bearing component part of a container inlet (2).

11. Container supply system (1) according to claim 9 or 10, **characterised in that** the connection piece (6) is formed by a section of the container guide (4) and is formed as one piece together with the container guide (4).

12. Container treatment machine, in particular a cleaning machine for containers, with a container supply system (1) according to any one of claims 9 to 11.

## Revendications

1. Ensemble pièce de format (5) pour un dispositif de chargement de récipient (1) d'une machine de traitement de récipient pour le raccordement à un guidage de récipient (4) du dispositif de chargement de récipient (1), présentant au moins une pièce de raccordement (6) en tôle et une pièce de format (7) coagissant avec la pièce de raccordement (6), dans lequel la pièce de raccordement (6) en tôle est réalisée pour la liaison d'alignement avec le guidage de récipient (4) du dispositif de chargement de récipient (1), dans lequel la pièce de format (7) est réalisée sous la forme d'un corps profilé avec une section transversale en U et présente une première et une seconde section de paroi (8, 9) ainsi qu'une section de nervure (10) reliant les sections de paroi (8, 9) et dans lequel la pièce de format (7) est enfichée de manière amovible sur la pièce de raccordement (6) de telle manière que la pièce de raccordement (6) soit reçue au moins partiellement entre la première et seconde section de paroi (8, 9) de la pièce de format (7), **caractérisé en ce que** la pièce de format (7) est maintenue par ressort sur la partie de raccordement (6), dans lequel la pièce de format (7) présente de plus un élément d'appui (11) à ressort pour l'appui sur une section d'arête (14) supérieure de la pièce de raccordement (6) et pour la fixation amovible, un élément de prise (12) prévu de plus de la pièce de format (7) vient en prise dans une section de prise (13) correspondante, agencée dans la zone de la section d'arête (14) supérieure de la partie de raccordement (6).

2. Ensemble pièce de format (5) selon la revendication 1, **caractérisé en ce que** l'élément de prise (12) de la pièce de format (7) est formé par au moins une saillie à tenon ou nez dépassant d'un côté intérieur de paroi (8.2) de la première section de paroi (8).

3. Ensemble pièce de format (5) selon la revendication 1 ou 2, **caractérisé en ce que** la section de prise (13) agencée dans la zone de la section d'arête (14) supérieure de la pièce de raccordement (6) est formée par une rainure de prise, dans lequel la rainure de prise (13) s'étend vers le bas à partir d'une arête supérieure (14') de la pièce de raccordement (6) et présente une ouverture d'entrée de rainure (13a) agencée au niveau de l'arête supérieure (14').

4. Ensemble pièce de format (5) selon la revendication 3, **caractérisé en ce que** la rainure de prise (13) est réalisée en forme de crochet et présente une section d'entrée (13.1) contigüe à l'ouverture d'entrée de rainure (13a), une section de renvoi (13.2) contigüe à la section d'entrée (13.1) et une section de verrouillage (13.3) contigüe à la section de renvoi (13.2).

5. Ensemble pièce de format (5) selon la revendication 4, **caractérisé en ce que** la section d'entrée (13.1) de la rainure de prise (13) s'étend vers le bas depuis l'arête supérieure (14') de la pièce de raccordement (6) le long d'un premier axe de rainure (NA1), que la section de renvoi (13.2) s'étend dans un angle par rapport à la section d'entrée (13.1) le long d'un deuxième axe de rainure (NA2) et que la section de verrouillage (13.3) s'étend dans un angle par rapport à la section de renvoi (13.2) le long d'un troisième axe de rainure (NA3).

6. Ensemble pièce de format (5) selon la revendication 5, **caractérisé en ce que** le premier axe de rainure (NA1) est orienté perpendiculairement au deuxième axe de rainure (NA2) et parallèlement au troisième axe de rainure (NA3).

7. Ensemble pièce de format (5) selon l'une quelconque des revendications précédentes, **caractérisé en ce que** l'élément d'appui (11) à ressort de la pièce de format (7) est formé par un élément de ressort agencé au niveau d'un côté intérieur (10.1) de la section de nervure (10).

8. Ensemble pièce de format (5) selon l'une quelconque des revendications précédentes, **caractérisé en ce que** la pièce de format (7) est fabriquée en une matière plastique et/ou que la pièce de raccordement (6) est fabriquée en un métal, en particulier en une tôle métallique.

9. Dispositif de chargement de récipient (1) pour une machine de traitement de récipient présentant une alimentation de récipient (2) avec plusieurs voies de transport (3) orientées parallèlement les unes aux autres et guidages de récipient (4) agencés entre les voies de transport (3) et au moins un ensemble pièce de format (5) raccordé à au moins un des guidages de récipient (4) selon l'une quelconque des revendications précédentes 1 à 8, dans lequel l'ensemble pièce de format (5) présente au moins une pièce de raccordement (6) en tôle et une pièce de format (7) coagissant avec la pièce de raccordement (6), dans lequel la pièce de raccordement (6) en tôle est reliée à une extrémité côté entrée du guidage de récipient (4) s'alignant sur le guidage de récipient (4) et une première et seconde surface latérale de la pièce de raccordement (6) sont orientées perpendiculairement à un plan de transport (TE) de la voie de transport, dans lequel la pièce de format (7) est réalisée sous la forme d'un corps profilé avec une section transversale en U et présente une première et une seconde section de paroi (8, 9) ainsi qu'une section de nervure (10) reliant les sections de paroi (8, 9) et dans lequel la pièce de format (7) est enfichée de manière amovible sur la pièce de raccordement (6) de telle manière que la pièce de raccordement (6) soit reçue au moins partiellement entre la première et la seconde section de paroi (8, 9) de la pièce de format (7), **caractérisé en ce que** la pièce de format (7) est maintenue à ressort sur la partie de raccordement (6), dans lequel la pièce de format (7) présente un élément d'appui (11) à ressort pour l'appui sur une section d'arête (14) supérieure de la pièce de raccordement (6) et pour la fixation amovible, un élément de prise (12) prévu de plus de la pièce de format (7) vient en prise dans une section de prise (13) correspondante, agencée dans la zone de la section d'arête (14) supérieure de la partie de raccordement (6).

10. Dispositif de chargement de récipient (1) selon la revendication 9, **caractérisé en ce que** la pièce de raccordement (6) est fixée avec sa section d'arête (15) inférieure opposée à la section d'arête (14) supérieure par le biais d'un élément de fixation (16) à un composant porteur d'une alimentation de récipient (2).

11. Dispositif de chargement de récipient (1) selon la revendication 9 ou 10, **caractérisé en ce que** la pièce de raccordement (6) est formée par une section du guidage de récipient (4) et est réalisée d'un seul tenant conjointement avec le guidage de récipient (4).

12. Machine de traitement de récipient, en particulier machine de nettoyage pour des récipients, avec un dispositif de chargement de récipient (1) selon l'une quelconque des revendications 9 à 11.
